**Europäisches Patentamt**

**European Patent Office**

**Office européen des brevets**

(19)

(11) Veröffentlichungsnummer : **0 046 982**
**B1**

(12) # EUROPÄISCHE PATENTSCHRIFT

(45) Veröffentlichungstag der Patentschrift :
28.11.84

(51) Int. Cl.³ : **A 01 D 90/10**

(21) Anmeldenummer : **81106634.9**

(22) Anmeldetag : **26.08.81**

(54) **Ladewagen mit einer Entladevorrichtung.**

(30) Priorität : **29.08.80 DE U 8023091**

(43) Veröffentlichungstag der Anmeldung :
**10.03.82 Patentblatt 82/10**

(45) Bekanntmachung des Hinweises auf die Patenterteilung : **28.11.84 Patentblatt 84/48**

(84) Benannte Vertragsstaaten :
**AT CH DE FR IT LI NL**

(56) Entgegenhaltungen :
**DE-A- 2 916 461**
**DE-U- 1 762 300**
**DE-U- 7 739 715**
**DE-U- 7 819 545**
**DE-U- 8 031 420**

(73) Patentinhaber : **Klöckner-Humboldt-Deutz AG Zweigniederlassung Fahr**
**D-7702 Gottmadingen (DE)**

(72) Erfinder : **Schaible, Siegfried**
**Breslauer Strasse 15**
**D-7700 Singen (DE)**
Erfinder : **Reinhold, Rudolf**
**Thurgauer Strasse 5**
**D-7702 Gottmadingen (DE)**
Erfinder : **Schaumburg, Willi**
**Marburger Strasse 14**
**D-3590 Bad Wildungen (DE)**

(74) Vertreter : **Patentanwälte Leinweber & Zimmermann**
**Rosental 7/II Aufg.**
**D-8000 München 2 (DE)**

**Beschreibung**

Die Erfindung betrifft einen Ladewagen mit einer Entladevorrichtung in Form von im Endbereich des Ladewagens im Abstand übereinander angeordneten Dosierwalzen, von denen die oberste mittels zweier ihre Enden abstützenden Parallelkurbelgetriebe, deren Kurbeln am Aufbau des Wagens angelenkt sind, absenkbar angeordnet ist.

Bei einem in der DE-U-7 819 545 beschriebenen gattungsgemäßen Ladewagen sind die Enden der oberen Dosierwalze am oberen Ende der Kurbeln der Parallelkurbelgetriebe gelagert. Über die Ausbildung des Lagers ist in dieser Druckschrift nichts Näheres ausgeführt. Wenn die beiden Parallelkurbelgetriebe zum Verringern der Gesamthöhe des Ladewagens verschwenkt werden, dann macht die Lagerung der obersten Dosierwalze diese Schwenkbewegung zwangsläufig mit. Aufgrund dieser Tatsache läßt sich die oberste Dosierwalze im Bedarfsfall aber nicht in allen Stellungen der Parallelkurbelgetriebe in gleich einfacher Weise ausbauen. Das Ausbauen der Dosierwalzen ist beispielsweise dann erforderlich, um den Ladewagen in herkömmlicher Weise einsetzen zu können, so daß auch ein undosiertes Entladen von Heu, Gras od. dgl. möglich ist.

Der Erfindung liegt die Aufgabe zugrunde, den gattungsgemäßen Ladewagen dahingehend zu verbessern, daß die oberste Dosierwalze unabhängig von der jeweiligen Stellung der diese abstützenden Parallelkurbelgetriebe im Bedarfsfall rash und einfach ausgebaut werden kann.

Erfindungsgemäß wird diese Aufgabe dadurch gelöst, daß die Enden der obersten Dosierwalze in näherungsweise horizontal angeordneten, U-förmig ausgebildeten Fangtaschen gelagert sind, die an den Koppeln der beiden Parallelkurbelgetriebe angeordnet sind.

Wenn die auf beiden Seiten des Ladewagens angeordneten Parallelkurbelgetriebe zum Absenken der obersten Dosierwalze betätigt werden, dann wird deren Koppel längs einer Kreisbahn abgesenkt, ohne jedoch selbst eine Drehbewegung auszuführen. Das bedeutet, daß die an den Koppeln der beiden Parallelkurbelgetriebe angeordneten U-förmigen Fangtaschen ebenfalls keine Drehbewegung ausführen. Die oberste Dosierwalze kann daher im Bedarfsfall unabhängig von der jeweiligen Stellung der Parallelkurbelgetriebe leicht ein- und ausgebaut werden, weil die als Lager dienenden U-förmig ausgebildeten Fangtaschen ihre horizontale Lage beibehalten. Zum Ein- und Ausbau der obersten Dosierwalze braucht diese lediglich in den U-förmigen Fangtaschen horizontal verschoben zu werden, ohne daß dieser Vorgang durch das Eigengewicht der Dosierwalze behindert wird.

Der Antrieb der obersten Dosierwalze erfolgt zweckmässigerweise über einen Kettentrieb, über den sie mit der darunter befindlichen angetriebenen Dosierwalze verbunden ist.

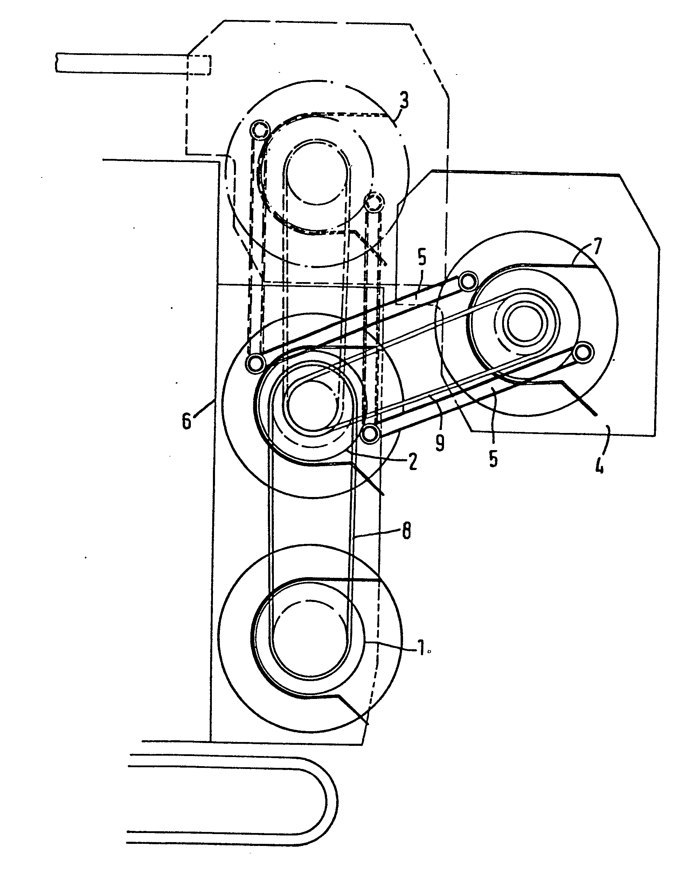

Ein Ausführungsbeispiel der Erfindung ist in der Zeichnung dargestellt und wird im folgenden näher erläutert.

In der Zeichnung ist die im hinteren Bereich eines Ladewagens angeordnete Entladevorrichtung in der Seitenansicht schematisch dargestellt. Zwischen zwei Seitenwänden 6 des Ladewagens sind drei Dosierwalzen 1, 2 und 3 im Abstand übereinanderliegend innerhalb von etwa horizontal angeordneten, U-förmig gestalteten Fangtaschen 7 gelagert. Die unterste Dosierwalze 1, der ein (nicht gezeigter) Antrieb zugeordnet ist, treibt über einen Kettentrieb 8 die mittlere Dosierwalze 2 an, die ihrerseits über einen Kettentrieb 9 die oberste Dosierwalze 3 antreibt.

Während die untere und die mittlere Dosierwalze 1 und 2 in ihrer Höhenlage nicht veränderlich sind, kann die obere Dosierwalze 3 zum Verringern der Bauhöhe des Ladewagens und zum Ausbauen aus der in strichpunktierten Linien gezeigten Betriebsstellung in die mit durchgezogenen Linien gezeigte Stellung abgesenkt werden. Zu diesem Zweck ist die obere Dosierwalze 3 an beiden Enden an seitlichen Wangen 4 drehbar gelagert. Die beiden Wangen 4 sind jeweils mit den Enden von zwei gleich langen parallelen Lenkern 5 gelenkig verbunden, deren andere Enden an den Seitenwänden 6 des Ladewagens angelenkt sind. Die Wangen 4 bilden damit jeweils die Koppel eines Parallelkurbelgetriebes, dessen Kurbeln von den Lenkern 5 gebildet sind. Wenn die oberste Dosierwalze 3 durch Verschwenden der parallelen Lenker 5 in die abgesenkte Stellung bewegt wird, dann bewegen sich die beiden Wangen 4 längs einer Kreisbahn, ohne jedoch eine Drehbewegung auszuführen. Die an den Wagen 4 befestigten U-förmigen Fangtaschen 7 behalten daher ihre horizontale Lage bei, so daß die oberste Dosierwalze 3 nach dem Lösen der Lagerungen ohne Schwierigkeiten aus den Fangtaschen 7 horizontal nach hinten ausgebaut werden kann.

**Ansprüche**

1. Ladewagen mit einer Entladevorrichtung in Form von im Endbereich des Ladewagens im Abstand übereinander angeordneten Dosierwalzen (1, 2, 3), von denen die oberste mittels zweier ihre Enden abstützender Parallelkurbelgetriebe, deren Kurbeln (5) am Aufbau des Wagens angelenkt sind, absenkbar angeordnet ist, dadurch gekennzeichnet, daß die Enden der obersten Dosierwalze (3) in näherungsweise horizontal angeordneten, U-förmig ausgebildeten Fangtaschen (7) gelagert sind, die an den Koppeln (4) der beiden Parallelkurbelgetriebe angeordnet sind.

2. Ladewagen nach Anspruch 1, dadurch gekennzeichnet, daß die oberste Dosierwalze (3) mit der darunter befindlichen angetriebenen Dosierwalze (2) über einen Kettentrieb (9) verbunden ist.

## Claims

1. Load carrying vehicle with an unloading device in the form of metering rollers (1, 2, 3) which are arranged with spacing one above the other in the end region of the vehicle, and of which the topmost is arranged to be lowerable by means of two parallel crank mechanisms, these mechanisms supporting the roller ends and their cranks (5) being pivotably attached to the body of the vehicle, characterised in that the ends of the topmost metering rollers (3) are mounted in U-shaped reception pockets (7) which are arranged approximately horizontally and which are arranged on the couplers (4) of the two parallel crank mechanisms.

2. Load carrying vehicle according to claim 1, characterised in that the topmost metering roller (3) is connected to the metering roller (2) situated below it, this latter being a driven roller, by means of a chain drive (9).

## Revendications

1. Remorque autochargeuse comportant un dispositif de déchargement sous la forme de cylindres de dosage (1, 2, 3) disposés les uns au-dessus des autres à une certaine distance à la partie extrême de la remorque autochargeuse, dont le supérieur est disposé en pouvant être abaissé au moyen de deux mécanismes parallèles à manivelle où s'appuient ses extrémités, dont les manivelles (5) sont articulées sur la carrosserie de la remorque caractérisée en ce que les extrémités du cylindre supérieur de dosage (3) sont logées dans des poches de réception (7) en forme de U et disposées presque horizontalement, qui sont disposées sur les bielles (4) des deux mécanismes parallèles à manivelle.

2. Remorque autochargeuse selon la revendication 1, caractérisée en ce que le cylindre supérieur de dosage (3) est relié au cylindre entraîné (2) se trouvant en dessous de lui, par une propulsion à chaîne.